# EUROPÄISCHE PATENTSCHRIFT

(11) **EP 2 208 643 B1**
(45) Veröffentlichungstag und Bekanntmachung des Hinweises auf die Patenterteilung: **06.06.2012**
(21) Anmeldenummer: 09177923.1
(22) Anmeldetag: 03.12.2009
(51) Int. Cl.: B60R 1/072, H01L 41/09

(54) **Verstellvorrichtung**
Adjusting device
Dispositif de réglage

(30) Priorität: 16.01.2009 DE 102009000277
(43) Veröffentlichungstag der Anmeldung: 21.07.2010
(73) Patentinhaber: Robert Bosch GmbH, 70442 Stuttgart (DE)
(72) Erfinder: Meyer, Andre, 71686, Remseck (DE); Hilzinger, Juergen, 71272, Renningen (DE)

(56) Entgegenhaltungen:
- DE-A1- 19 744 126
- DE-A1- 19 859 024
- JP-A- 9 002 154
- JP-A- 9 285 146
- JP-A- 2004 289 914

## Beschreibung

### Stand der Technik

Die Erfindung betrifft eine Verstellvorrichtung gemäß dem Oberbegriff des Anspruchs 1.

Eine derartige Verstellvorrichtung wird beispielsweise zur Verstellung eines Außenspiegels eines Kraftfahrzeugs eingesetzt. Die bekannte Verstellvorrichtung für den Außenspiegel weist dabei zwei als Elektromotoren ausgebildete Verstelleinheiten auf. Die Drehbewegungen der Antriebswellen der beiden Elektromotoren werden über einen relativ aufwendigen Getriebemechanismus in eine lineare Bewegung übersetzt, die zur Verstellung des Außenspiegels in den beiden Achsen (oben/unten, links/rechts) erforderlich ist. Um dabei eine präzise Umsetzung der Verstellbewegung zu erzielen, muss der Getriebemechanismus spielfrei und präzise gefertigt sein. Ferner benötigen sowohl die Elektromotoren als auch der Getriebemechanismus einen nicht unbeträchtlichen Bauraum innerhalb des Spiegelgehäuses des Außenspiegels.

Weiterhin sind Piezoaktoren bekannt, die zur Erzeugung linearer Bewegungen dienen.

Die JP 2004 289 914 A zeigt einen Ultraschallmotor bei dem drei stabförmige Ultraschalloszillatoren winklig an einem Übertragungskopf angeordnet sind. Dieser Übertragungskopf der Ultraschallbewegung steht unmittelbar in Kontakt zu einer ebenen oder zylinderförmigen Umfangsfläche, wodurch eine Relativbewegung zwischen dieser und dem Übertragungskopf ausgeführt wird.

Die Verstellvorrichtung gemäß der JP 2004 289 914 A entspricht dem Oberbegriff der Anspruchs 1.

Mit der JP 09 002 154 A ist ein verstellbarer Spiegel bekannt geworden, bei dem die Spiegelfläche mittels eines piezoelektrischen Elements gegenüber einem Spiegelgehäuse verstellt wird. Dabei ist zwischen dem festen Spiegelgehäuse und dem einen Piezoelement ein Gummi-Bauteil angeordnet, um die Vibration des Piezoelements gegenüber dem Gehäuse zu entkoppeln.

### Offenbarung der Erfindung

Der Erfindung liegt die Aufgabe zugrunde, eine Verstellvorrichtung bereitzustellen, die bei relativ einfachem und kompaktem Aufbau eine hochgenaue und hochdynamische Verstellung eines Objektes ermöglicht. Diese Aufgabe wird bei einer Verstellvorrichtung mit den Merkmalen des Anspruchs 1 gelöst. Vorteilhafte Weiterbildungen der erfindungsgemäßen Verstellvorrichtung sind in den Unteransprüchen angegeben. In den Rahmen der Erfindung fallen sämtliche Kombinationen aus zumindest zwei in der Beschreibung, den Ansprüchen und/oder den Figuren offenbarten Merkmalen.

Durch die im Anspruch 1 vorgesehene Verwendung von Piezoaktoren als Verstelleinheiten wird der Übertragungsmechanismus insoweit vereinfacht bzw. in seiner Baugröße reduziert, als dass die von Piezoaktoren erzeugbare (lineare) Hubbewegungen sich relativ einfach in eine Schwenkbewegung des Objektes umsetzen lassen.

Der Übertragungsmechanismus lässt sich erfindungsgemäß konstruktiv besonders einfach mittels eines die Piezoaktoren verbindenden Brückenelements verwirklichen, das über ein Übertragungselement mit dem zu verstellenden Objekt gekoppelt ist.

Ein besonders kompakter Aufbau ergibt sich erfindungsgemäß das Übertragungselement zwischen den Piezoaktoren angeordnet ist.

Ein besonders einfacher und kompakter Aufbau der Verstellvorrichtung ergibt sich, wenn drei Piezoaktoren vorgesehen sind, die achsparallel und in gleichmäßigen Winkelabständen versetzt zueinander angeordnet sind.

Die Erfindung lässt sich besonders vorteilhaft zur Verstellung eines Außenspiegels an einem Kraftfahrzeug einsetzen, da dort ein besonders kompakter Aufbau der Verstellvorrichtung sowie eine schnelle und positionsgenaue Verstellung des Außenspiegels erwünscht sind.

Weitere Vorteile, Merkmale und Einzelheiten der Erfindung ergeben sich aus der nachfolgenden Beschreibung des bevorzugten Ausführungsbeispiels sowie anhand der Zeichnungen.

Diese zeigen in:
- Fig. 1: eine erfindungsgemäße Verstellvorrichtung in teilweise geschnittener, perspektivischer Ansicht und
- Fig. 2: die Verstellvorrichtung gemäß Fig. 1 ohne Spiegelgehäuse ebenfalls in teilweise geschnittener Ansicht.

In den Figuren sind gleiche Elemente und Elemente mit der gleichen Funktion mit den gleichen Bezugzeichen gekennzeichnet.

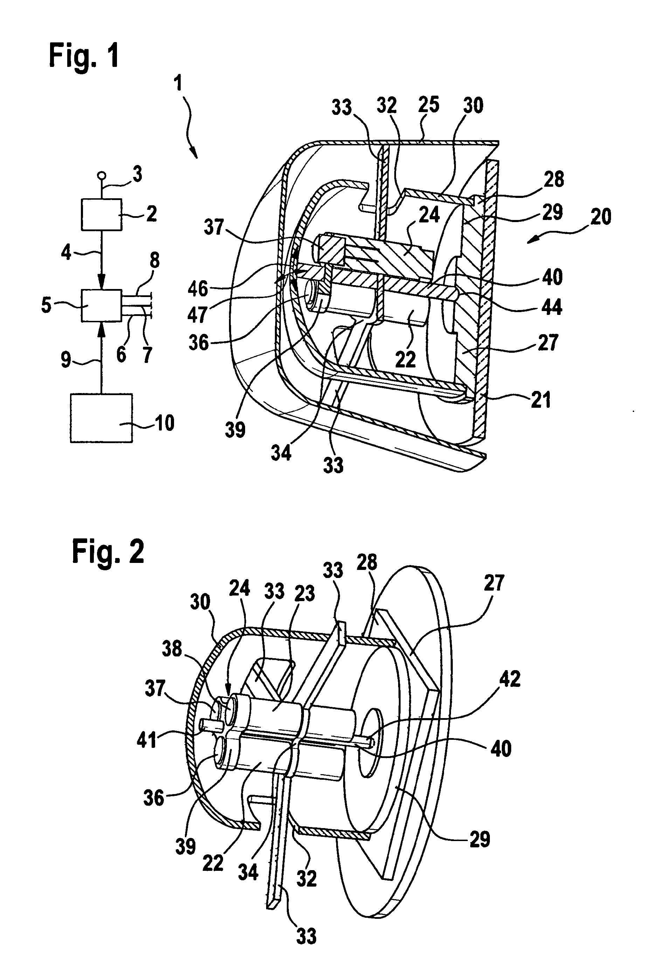

In Fig. 1 ist eine Verstellvorrichtung 20 für einen Außenspiegel 21 eines Kraftfahrzeugs dargestellt. Die Verstellvorrichtung 20 ist Bestandteil eines Spiegelverstellsystems 1. Das Spiegelverstellsystem 1 umfasst beispielhaft eine Eingabeeinheit 2 mit einem manuell vom Fahrer des Kraftfahrzeugs bedienbaren Hebel 3. Über den Hebel 3 lässt sich die Soll-Position des Außenspiegels 21 eingegeben. Die Eingabeeinheit 2 ist über eine erste Leitung 4 mit einem Steuergerät 5 verbunden, das zur Ansteuerung eines im Weiteren noch näher zu erläuternden Verstellmechanismus dient. Über weitere Leitungen 6, 7, 8 werden Piezoaktoren 22, 23, 24 angesteuert, die zur Bewegung bzw. Umsetzung der Soll-Position des Außenspiegels 21 dienen. Dabei kann das Steuergerät 5 in Abänderung des dargestellten Ausführungsbeispiels auch in der Eingabeeinheit 2 integral angeordnet sein. Zusätzlich ist das Steuergerät 5 über eine Steuerleitung 9 mit einem weiteren Steuergerät 10 des Kraftfahrzeugs verbunden. Das weitere Steuergerät 10 dient zur Ansteuerung des Außenspiegels 21 beispielsweise für den Fall, dass der Rückwärtsgang eingelegt ist, und der Außenspiegel 21 nach unten verschwenkt werden soll, um dem Fahrer eine Bordsteinkante zu zeigen. Das weitere Steuergerät 10 kann jedoch auch zur Ansteuerung des Außenspiegels 21 aus anderen Gründen dienen bzw. auch fehlen oder durch eine Datenleitung ersetzt sein, die mit Informationen aus dem Daten-Bussystem des Kraftfahrzeugs gespeist wird.

Die Verstellvorrichtung 20 ist innerhalb eines Spiegelgehäuses 25 angeordnet. Das Spiegelgehäuse 25 ist im Ausführungsbeispiel topfförmig ausgebildet, wobei der Außenspiegel 21 in etwa bündig mit der offenen Seite des Spiegelgehäuses 25 abschließt. Auf der dem Spiegelgehäuse 25 zugewandten Seite ist der Außenspiegel 21 mit einer Bodenplatte 27 verbunden. Die Bodenplatte 27 weist einen rechteckförmigen, dem Außenspiegel 21 zugewandten Halteabschnitt 28, und einen auf der dem Außenspiegel 21 abgewandten Seite angeordneten, kreisförmigen Kopplungsabschnitt 29 auf.

Der Kopplungsabschnitt 29 ist von einem glockenförmigen Gehäuse 30 umfasst. Das Gehäuse 30 weist drei, um 120 Grad zueinander versetzt angeordnete Durchbrüche 32 auf, durch die mit Spiel drei Haltearme 33 einer Trägerplatte 34 ragen. Die Haltearme 33 sind an der Innenseite des Spiegelgehäuses 25 mit diesem verbunden. Im mittleren Bereich der im Wesentlichen sternförmigen Trägerplatte 34 sind Ausnehmungen zur Aufnahme der drei Piezoaktoren 22, 23, 24 ausgebildet, die somit in der Trägerplatte 34 befestigt sind. Die drei Piezoaktoren 22, 23, 24 sind achsparallel um jeweils 120 Grad zueinander versetzt angeordnet.

Auf der dem Außenspiegel 21 abgewandten Seite weisen die Piezoaktoren 22, 23, 24 Stellkolben 36, 37, 38 auf, die entsprechend der Ansteuerung der Piezoaktoren 22, 23, 24 einen Hub senkrecht zur Ebene des Außenspiegels 21 ausführen können. Die Stellkolben 36, 37, 38 sind mit einem gemeinsamen Brückenelement 39 miteinander verbunden, das mittig einen Stößel 40 zur Außenspiegelverstellung trägt, der dort starr befestigt ist.

Der stiftförmige Stößel 40 ist parallel zu den Piezoaktoren 22, 23, 24 angeordnet und drückt mit seinem einen Ende 41 unter Vorspannung gegen die gewölbte Innenwand des Gehäuses 30, d.h. im Bereich des Bodens des Gehäuses 30. Das Gehäuse 30 kann zur Verstärkung seiner Federwirkung auf den Stößel 40 beispielsweise eine zusätliche Sicke o. Ä. aufweisen. Ein anderes Ende 42 ist in einem Gelenk 44 mittig in dem Kopplungsabschnitt 29 der Bodenplatte 27 gelagert, wobei das Gelenk 44 ein Verschwenken des Stößels 40 in allen Richtungen der Spiegelebene ermöglicht.

Um ein Verschwenken des Außenspiegels 21 in den beiden erforderlichen Richtungen unten/oben und rechts/links entsprechend der Doppelpfeile 46, 47 zu ermöglichen, ist es bei Verwendung von drei Piezoaktoren 22, 23, 24 sinnvoll, dass die Stößelachse mittig bzw. zentrisch zu den Achsen der Stellkolben 36, 37, 38 bzw. der Piezoaktoren 22, 23, 24 angeordnet ist. Das Verschwenken des Außenspiegels 21 erfolgt durch eine phasenverschobene Ansteuerung der Piezoaktoren 22, 23, 24 bzw. deren Stellkolben 36, 37, 38. Dies erzeugt am Stößel 40 eine elliptische Bewegung bzw. einen Mikroschritt. Dieser Mikroschritt bewirkt, dass das Gehäuse 30 relativ zum Stößel 40 verschoben wird. Das Gelenk 44 lässt jedoch nur eine Drehbewegung in der Spiegelebene zu. Somit wird der Verbund bestehend aus Gehäuse 30, Bodenplatte 27 und Außenspiegel 21 um das Gelenk 44 verschwenkt.

Ergänzend wird erwähnt, dass anstatt dreier Piezoaktoren 22 bis 24 auch eine Spiegelverstellvorrichtung mit zwei, oder aber mit mehr als drei Piezoaktoren 22, 23, 24 denkbar ist. Ferner ist die Erfindung nicht auf die Verstellung eines Außenspiegels in einem Fahrzeug beschränkt. Vielmehr können auch andere Anwendungen denkbar sein, bei denen Objekte schnell und genau verstellt werden sollen.

## Patentansprüche

1. Verstellvorrichtung, mit einem in zwei voneinander unabhängigen Richtungen (46, 47) zu verstellendem Element (21), wobei das Element (21) mittels eines Übertragungsmechanismus mit wenigstens zwei Verstelleinheiten gekoppelt ist, wobei die Verstelleinheiten als Piezoaktoren (22, 23, 24) ausgebildet sind und die Piezoaktoren (22, 23, 24) Stellelemente (36, 37, 38) aufweisen, die miteinander über zumindest ein Brückenelement (39) verbunden sind, und die mittels eines gemeinsamen Übertragungselements (40) mit dem zu verstellenden Element (21) gekoppelt sind, **dadurch gekennzeichnet, dass** das Übertragungselement (40) als stiftförmiger Stößel (40) ausgebildet ist und parallel zu den parallel angeordneten Piezoaktoren (22, 23, 24) und zentrisch zwischen diesen angeordnet ist, und das Übertragungselement (40) mit seinem einen Ende (41) unter Vorspannung gegen die gewölbte Innenwand eines zumindest die Piezoaktoren (22, 23, 24) aufnehmenden Innengehäuses (30) drückt, und mit einem anderen Ende (42) an dem Element (21) auf der den Piezoaktoren (22, 23, 24) zugewandten Seite verschwenkbar gelagert ist.

2. Verstellvorrichtung nach Anspruch 1,
**dadurch gekennzeichnet, dass** das Ende (42) des Übertragungselements (40) mit einem Gelenk (44) mittig in einem Kopplungsabschnitt 29 einer Bodenplatte (27) des Innengehäuses (30) gelagert ist, wobei das Gelenk (44) ein Verschwenken des Übertragungselements (40) in allen Richtungen der Ebene des Elements (21) ermöglicht.

3. Verstellvorrichtung nach Anspruch 1 oder 2,
**dadurch gekennzeichnet, dass** drei Piezoaktoren (22, 23, 24) vorgesehen sind, die in gleichmäßigen Winkelabständen angeordnet sind.

4. Verstellvorrichtung nach einem der Ansprüche 1 bis 3,
**dadurch gekennzeichnet, dass** die Piezoaktoren (22, 23, 24) an einem gemeinsamen Trägerelement (34) befestigt sind, das in einem Gehäuse (25) angeordnet ist, wobei das zu verstellende Element (21) gegenüber dem Gehäuse (25) beweglich angeordnet ist.

5. Verstelleinrichtung nach einem der Ansprüche 1 bis 4,
**dadurch gekennzeichnet, dass** das Innengehäuse (30) Durchbrüche (32) aufweist, durch die das Trägerelement (34) mit Spiel hindurchragt.

6. Verstelleinrichtung nach einem der vorhergehenden Ansprüche,
**dadurch gekennzeichnet, dass** das Innengehäuse (30) eine glockenartige Form aufweist, die von der Bodenplatte (27) abgeschlossen ist.

7. Verstellvorrichtung nach einem der vorhergehenden Ansprüche
**dadurch gekennzeichnet, dass** der Verbund, bestehend aus Innengehäuse (30), Bodenplatte (27) und Element (21), gemeinsam um das Gelenk (44) verschwenkt wird.

8. Verstellvorrichtung nach einem der vorhergehenden Ansprüche,
**dadurch gekennzeichnet, dass** das Verschwenken des Elements (21) durch eine phasenverschobene Ansteuerung der Piezoaktoren (22, 23, 24) bzw. deren Stellkolben (36, 37, 38) erfolgt, wobei insbesondere die Piezoaktoren (22, 23, 24) über separate Leitungen (6, 7, 8) angesteuert werden.

9. Verstellvorrichtung nach einem der vorhergehenden Ansprüche,
**dadurch gekennzeichnet, dass** das Element (21) der Außenspiegel (21) eines Kraftfahrzeugs ist.

10. Verstellvorrichtung nach einem der vorhergehenden Ansprüche,
**dadurch gekennzeichnet, dass** der Außenspiegel (21) mit dem Innengehäuse (30) verbunden ist.

## Claims

1. Adjusting device, with an element (21) to be adjusted in two mutually independent directions (46, 47), the element (21) being coupled to at least two adjusting units by means of a transmission mechanism, the adjusting units being formed as piezo actuators (22, 23, 24) and the piezo actuators (22, 23, 24) having adjusting elements (36, 37, 38), which are connected to one another by way of at least one bridge element (39) and which are coupled to the element (21) to be adjusted by means of a common transmission element (40), **characterized in that** the transmission element (40) is formed as a pin-shaped pushrod (40) and is arranged parallel to the parallel-arranged piezo actuators (22, 23, 24) and centrically between them, and the transmission element (40) presses with its one end (41) under prestress against the curved inner wall of an inner housing (30), accommodating at least the piezo actuators (22, 23, 24), and is mounted with another end (42) pivotably on the element (21), on the side facing the piezo actuators (22, 23, 24).

2. Adjusting device according to Claim 1, **characterized in that** the end (42) of the transmission element (40) is mounted with a joint (44) centrally in a coupling portion (29) of a base plate (27) of the inner housing (30), the joint (44) making it possible for the transmission element (40) to pivot in all directions of the plane of the element (21).

3. Adjusting device according to Claim 1 or 2, **characterized in that** three piezo actuators (22, 23, 24) are provided, arranged at uniform angular distances.

4. Adjusting device according to one of Claims 1 to 3, **characterized in that** the piezo actuators (22, 23, 24) are fastened to a common carrier element (34), which is arranged in a housing (25), the element (21) to be adjusted being arranged movably with respect to the housing (25).

5. Adjusting device according to one of Claims 1 to 4, **characterized in that** the inner housing (30) has apertures (32), through which the carrier element (34) protrudes with play.

6. Adjusting device according to one of the preceding claims, **characterized in that** the inner housing (30) has a bell-like form, which is closed off by the base plate (27).

7. Adjusting device according to one of the preceding claims, **characterized in that** the assembly comprising the inner housing (30), the base plate (27) and the element (21) is pivoted together about the joint (44).

8. Adjusting device according to one of the preceding claims, **characterized in that** the pivoting of the element (21) takes place by a phase-shifted activation of the piezo actuators (22, 23, 24) or the control pistons (36, 37, 38) thereof, the piezo actuators (22, 23, 24) particularly being activated by way of separate lines (6, 7, 8).

9. Adjusting device according to one of the preceding claims, **characterized in that** the element (21) is the exterior mirror (21) of a motor vehicle.

10. Adjusting device according to one of the preceding claims, **characterized in that** the exterior mirror (21) is connected to the inner housing (30).

## Revendications

1. Dispositif de réglage, comprenant un élément (21) à régler dans deux directions indépendantes l'une de l'autre (46, 47), l'élément (21) étant accouplé au moyen d'un mécanisme de transmission à au moins deux unités de réglage, les unités de réglage étant réalisées sous forme d'actionneurs piézoélectriques (22, 23, 24) et les actionneurs piézoélectriques (22, 23, 24) présentant des éléments de commande (36, 37, 38) qui sont connectés les uns aux autres par le biais d'au moins un élément de pont (39), et qui sont accouplés à l'élément (21) à régler au moyen d'un élément de transmission commun (40), **caractérisé en ce que** l'élément de transmission (40) est réalisé sous forme de poussoir (40) en forme de goupille et est disposé parallèlement aux actionneurs piézoélectriques (22, 23, 24) disposés en parallèle et centralement entre ceux-ci, et l'élément de transmission (40) pressant avec l'une de ses extrémités (41) avec précontrainte contre la paroi interne courbée d'un boîtier interne (30) recevant au moins les actionneurs piézoélectriques (22, 23, 24), et étant supporté de manière pivotante avec son autre extrémité (42) au niveau de l'élément (21) sur le côté tourné vers les actionneurs piézoélectriques (22, 23, 24).

2. Dispositif de réglage selon la revendication 1, **caractérisé en ce que** l'extrémité (42) de l'élément de transmission (40) est supportée avec une articulation (44) centralement dans une portion d'accouplement (29) d'une plaque de fond (27) du boîtier interne (30), l'articulation (44) permettant un pivotement de l'élément de transfert (40) dans toutes les directions du plan de l'élément (21).

3. Dispositif de réglage selon la revendication 1 ou 2,
**caractérisé en ce que** trois actionneurs piézoélectriques (22, 23, 24) sont prévus, lesquels sont disposés à des distances angulaires uniformes.

4. Dispositif de réglage selon l'une quelconque des revendications 1 à 3,
**caractérisé en ce que** les actionneurs piézoélectriques (22, 23, 24) sont fixés sur un élément de support commun (34), qui est disposé dans un boîtier (25), l'élément à régler (21) étant disposé de manière mobile par rapport au boîtier (25).

5. Dispositif de réglage selon l'une quelconque des revendications 1 à 4,
**caractérisé en ce que** le boîtier interne (30) présente des orifices (32) à travers lesquels passe l'élément de support (34) avec jeu.

6. Dispositif de réglage selon l'une quelconque des revendications précédentes, **caractérisé en ce que** le boîtier interne (30) présente une forme en cloche, qui est fermée par la plaque de fond (27).

7. Dispositif de réglage selon l'une quelconque des revendications précédentes,
**caractérisé en ce que** l'assemblage constitué du boîtier interne (30), de la plaque de fond (27) et de l'élément (21), est pivoté d'un bloc autour de l'articulation (44).

8. Dispositif de réglage selon l'une quelconque des revendications précédentes,
**caractérisé en ce que** le pivotement de l'élément (21) s'effectue par une commande déphasée des actionneurs piézoélectriques (22, 23, 24) ou de leurs pistons de commande (36, 37, 38), les actionneurs piézoélectriques (22, 23, 24) étant notamment commandés par le biais de lignes séparées (6, 7, 8).

9. Dispositif de réglage selon l'une quelconque des revendications précédentes,
**caractérisé en ce que** l'élément (21) est le rétroviseur extérieur (21) d'un véhicule automobile.

10. Dispositif de réglage selon l'une quelconque des revendications précédentes,
**caractérisé en ce que** le rétroviseur extérieur (21) est connecté au boîtier interne (30).
